# EUROPÄISCHE PATENTSCHRIFT

(11) **EP 1 131 992 B1**
(45) Veröffentlichungstag und Bekanntmachung des Hinweises auf die Patenterteilung: **28.12.2005**
(21) Anmeldenummer: 01104960.8
(22) Anmeldetag: 01.03.2001
(51) Int. Cl.: A01D 34/66

(54) **Mähmaschine**
Mowing machine
Machine de coupe

(30) Priorität: 10.03.2000 DE 10011730
(43) Veröffentlichungstag der Anmeldung: 12.09.2001
(73) Patentinhaber: Maschinenfabrik Bernard Krone GmbH, 48480 Spelle (DE)
(72) Erfinder: Krone, Bernard E.h., Dr.-Ing., 48480 Spelle (DE); Horstmann, Josef, Dr.-Ing., 49479 Ibbenbüren (DE); Bolte, Albert, Dipl.-Ing., 48480 Spelle (DE)

(56) Entgegenhaltungen:
- EP-A- 0 073 360
- EP-A- 0 734 645
- EP-A- 0 809 928
- EP-A- 0 839 443
- EP-A- 0 945 051
- EP-A- 1 060 650
- DE-A- 19 534 695
- DE-U- 9 112 331

## Beschreibung

Die Erfindung betrifft eine Mähmaschine zum Anbau an eine Hubeinrichtung eines landwirtschaftlichen Trägerfahrzeuges nach dem Oberbegriff des Anspruches 1. Derartige Maschinen sind aus der Praxis in vielfältigen Ausführungsformen bekannt und werden hauptsächlich zum Ernten von Gras oder dgl. Erntegüter verwendet.

Eine aus der DE 91 12 331 U1 bekannte Mähmaschine weist einen an einem Anbaubock angeordneten Hubbalken auf, an dessen äußerem Ende ein mit Mähwerkzeugen bestückter Mähbalken über eine hydraulische Kolben-Zylinder-Anordnung um eine fahrtrichtungsparallele Achse zwischen einer horizontalen Arbeits- und Betriebsstellung, einer angehobenen Vorgewendestellung und einer zumindest annähernd vertikalen Transportstellung verschwenkbar ist. Bei der Überführung des Mähbalkens aus der Arbeits- und Betriebstellung in die Transportstellung wird dieser zunächst in eine angehobene Vorgewendestellung angehoben, welche durch einen Anschlag in einer Falle definiert ist. Ein Weiterschwenken des Mähbalkens ist aber erst nach dem Entfernen/Anheben der Falle möglich, wozu ein zusätzlicher manueller Arbeitsaufwand des Bedieners erforderlich ist. Zur Reduzierung bzw. Anpassung der Auflagekraft des Mähbalkens auf dem Erdboden an unterschiedliche Arbeits- und Betriebsverhältnisse ist eine Zugfeder vorgesehen, welche sich zwischen dem Anbaubock und dem Hubbalken erstreckt. Über eine Verstellung der Vorspannlänge der Zugfeder wird eine Veränderung der Auflagekraft des Mähbalkens auf dem Erdboden herbeigeführt. Ein Mangel der vorstehend beschriebenen Mähmaschine ist in dem unbefriedigendem Bedienungsaufwand zu sehen. Des weiteren ist vorstehende Lösung mit einem erheblichen baulichen Aufwand verbunden.

Aus der DE 195 34 695 A1 ist ein an einem Schlepper ansetzbares Heckmähwerk bekannt, welches insbesondere für große Arbeitsbreiten ausgelegt und deshalb vorrangig konstruktiv derart ausgebildet ist, daß bei einer Überführung des Mähaggregates aus einer Arbeits- und Betriebsstellung in eine Transportstellung die Lage des Schwerpunktes des Mähaggregates in einen Bereich gelangt, der zwischen den Rädern des Schleppers liegt. Das Mähaggregat schwenkt hierbei einseitig, um eine in Fahrtrichtung ausgerichtete Schwenkachse eines Schwenkarmes, der wiederum am Tragrahmen in der Hebehydraulik der Dreipunktaufhängung des Schleppers gelagert ist, über 90° hinaus. Der Schwenkwinkel beim Erreichen der Transportstellung liegt in einem Bereich zwischen 105° punktaufhängung und den Hauptzylinder für die Winkelverstellung. Ebenfalls muß die Aushebung vom Bediener beobachtet werden, da sonst irrtümlich die Transportstellung erreicht wird. Ferner beeinflußt das Ausheben und Absenken der Dreipunktaufhängung die Bodenfreiheit zwischen dem Tragrahmen und dem Erdboden oder dem auf dem Erdboden liegenden gemähten Erntegut.

Aufgabe der Erfindung ist es daher, eine Trageinrichtung für eine Mähmaschine der angegebenen Art zu schaffen, bei der die Mäheinrichtung möglichst einfach und bedienerfreundlich aus einer Arbeits- und Betriebsstellung in eine angehobene Vorgewendestellung und in eine zumindest annähernd vertikale Transportstellung überführbar ist.

Zur Lösung der gestellten Aufgabe zeichnet sich die Mähmaschine der vorstehend genannten Art durch die im Anspruch 1 angegebenen Merkmale aus. Hinsichtlich der weiteren Ausgestaltung der Erfindung wird auf die Ansprüche 2 bis 13 verwiesen.

Eine nach den Merkmalen der Erfindung gestaltete Mähmaschine zum Anbau an eine Hubeinrichtung eines landwirtschaftlichen Trägerfahrzeuges, insbesondere eines landwirtschaftliche Ackerschleppers weist eine Trageinrichtung für eine seitlich von dem landwirtschaftlichen Trägerfahrzeug geführte Mäheinrichtung auf, durch die die Mäheinrichtung zwischen einer horizontalen Arbeits-und Betriebsstellung, einer angehobenen Vorgewendestellung und einer zumindest annähernd vertikalen Transportstellung verschwenkbar ist. Die angehobene Vorgewendestellung stellt hierbei eine Zwischenstellung zwischen der Arbeits- und Betriebsstellung und der Transportstellung dar, in der die Mäheinrichtung soweit vom Erdboden angehoben / hochgeschwenkt ist, daß in Mähschwaden abgelegtes Erntegut nicht mehr mit den rotierenden Schneidorganen in Berührung kommt. Erfindungsgemäß ist es nun vorgesehen, daß der Trageinrichtung der Mäheinrichtung nür ein Stellglied Zügeordnet ist, das zwei voneinander unabhängige Stellbewegungen zur Überführung der Mäheinrichtung aus der Arbeits- und Betriebsstellung in die angehobene Vorgewendestellung und/oder in die zumindest annähernd vertikale Transportstellung und 150°. Bei einer Ausführungsvariante wird dieser Schwenkvorgang zur Überführung des Mähaggregates in eine Transportstellung mittels zweier Hydraulikzylinder (Stellglieder), nämlich einem Hauptzylinder für einen Bereich des Betätigungswinkels von 0° bis etwa 100° und einem Hilfszylinder für den Bereich von etwa 80° bis etwa 150° und mehr, erreicht. Der Hilfszylinder hat eine Doppelfunktion und soll gleichzeitig als Bremszylinder wirken. Es können hier zwar mit zwei Stellgliedern zwei voneinander unabhängig Stellbewegungen erfolgen, die jedoch nicht für eine gezielte Aushebung des Mähaggregates in eine angehobene Vorgewendestellung nutzbar sind. Der Schwenkwinkelbereich einer Vorgewendestellung beträgt etwa 20° bis 30°. Eine angehobene Vorgewendestellung wird bei diesem Heckmähwerk durch die schlepperseitige Hebehydraulik der Dreipunktaufhängung erreicht, indem diese das Mähaggregat parallel zum Erdboden anhebt. Die Praxis fordert jedoch eine Anhebung des Mähaggregates in einer Vorgewendestellung, dessen Abstandsmaß zum Erdboden am freien Ende des Mähaggregates größer ist als am schlepperseitigen Ende. Es wird hierdurch verhindert, daß das Mähaggregat bei Nickbewegungen quer zur Fahrtrichtung am äußeren Ende mit dem Erntegut, welches beispielsweise in Schwaden abgelegt ist, in Berührung kommt. Um eine derartige Vorgewendestellung zu erreichen, müssen mit dem bekannten Heckmähwerk zwei Stellbewegungen von einer Bedienperson vorgenommen werden. Sie betätigt die Hebehydraulik der Drei-aüsführen kann. In einer einfachen Ausführungsform ist die Größe der Stellbewegungen so gewählt, daß durch eine erste Stellbewegung eine Überführung der Mäheinrichtung aus der Arbeits- und Betriebsstellung in die angehobene Vorgewendestellung erfolgt, während mit einer zweiten Stellbewegung, die von der ersten Stellbewegung nicht beeinflußt wird, eine direkte Überführung der Mäheinrichtung aus der Arbeits- und Betriebsstellung in die zumindest annähernd vertikale Transportstellung eingeleitet wird. Nach der Erfindung kann es jedoch auch so sein, daß mit der ersten Stellbewegung eine Überführung der Mäheinrichtung aus der Arbeits- und Betriebsstellung in die angehobene Vorgewendestellung ereichbar ist, während zur Überführung der Mäheinrichtung aus der Arbeits- und Betriebsstellung in die zumindest annähernd vertikale Transportstellung beide Stellbewegungen erforderlich sind. Der Bediener kann also durch die Auswahl bzw. Ansteuerung des jeweiligen Teiles des Stellgliedes eine Überführung der Mäheinrichtung in die angehobene Vorgewendestellung oder in die Transportstellung einleiten, ohne dabei auf das Umlegen/Entfernen von Anschlagelementen/Fallen achten zu müssen. Diese Eigenschaft wirkt sich besonders vorteilhaft aus, wenn die Bedienvorgänge vom Fahrersitz des Bedieners in der Kabine eines landwirtschaftlichen Trägerfahrzeuges aus eingeleitet werden sollen.

In einer vorteilhaften Ausführungsform besteht das erfindungsgemäße Stellglied aus zwei hydraulischen Kolben-Zylinder-Anordnungen, deren Zylinderböden einander zugewandt und fest miteinander verbunden sind, so daß sich eine kompakte Baugruppe ergibt. Es ist aber auch möglich, daß die Kolben-Zylinder-Anordnungen über ein gemeinsames Zylinderbodenelement miteinander in Verbindung stehen. An den Enden der Kolbenstangen der hydraulischen Kolben-Zylinder-Anordnungen sind Anlenkstellen vorgesehen, über die das erfindungsgemäße Stellglied einenends beispielsweise an einem ortsfesten Abschnitt der Trageinrichtung angelenkt ist, während das andere Ende des Stellgliedes an einem um eine in Fahrt-und Arbeitsrichtung weisende Achse schwenkbaren zweiten Abschnitt der Trageinrichtung angreift, an dem in einer vorteilhaften Ausführungsform über eine sogenannte Schwerpunktaufhängung/Mittenaufhängung eine Mäheinrichtung angelenkt ist. Die hydraulischen Kolben-Zylinder-Anordnungen sind dabei so gestaltet, daß sie bei einer Beaufschlagung mit einem Druckmittel eine Zugkraft erzeugen und somit eine Schwenkbewegung des schwenkbaren Abschnittes der Trageinrichtung mit der daran aufgehängten Mäheinerichtung einleiten. Der Hub der hydraulischen Kolben-Zylinder-Anordnungen ist so gewählt, daß sich jeweils bei ganz eingefahrener Kolbenstange der entsprechenden Kolben-Zylinder-Anordnung die Mäheinrichtung entweder in der angehobenen Vorgewendestellung oder in der zumindest annähernd vertikalen Transportstellung befindet.

Nach der Erfindung ist es aber ebenso denkbar, daß die hydraulischen Kolben-Zylinder-Anordnungen zur Bildung des erfindungsgemäßen Stellgliedes so angeordnet sind, daß deren Kolbenstangen einander zugewandt und fest miteinander verbunden sind.

In Weiterbildung der Erfindung ist es vorgesehen, daß dem erfindungsgemäßen Stellglied Mittel zur Veränderung der Auflagekraft der Mäheinrichtung auf dem Erdboden zugeordnet sind, so daß dadurch eine Anpassung der Auflagekraft an unterschiedliche Arbeits- und Betriebsverhältnisse erfolgen kann. In einer einfachen Ausführungsform können diese Mittel als Kraftspeicher ausgeführt sein, welche sich beispielsweise zwischen dem ortsfesten Abschnitt und dem schwenkbaren, die Mäheinrichtung tragenden Abschnitt der Trageinrichtung erstrecken oder sich in einer zu einer hydraulischen Kolben-Zylinder-Anordnung des Stellgliedes parallelen Ausrichtung befinden, wobei eine Anlenkstelle der Kraftspeicher mit der Anlenkstelle des Stellgliedes an dem ortsfesten Abschnitt der Trageinrichtung übereinstimmt, während die zweite Anlenkstelle der Kraftspeicher an der zweiten Kolben-Zylinder-Anordnung des Stellgliedes angebracht ist. In konstruktiv einfachen Lösungen können die Kraftspeicher eine mechanische Funktionsweise haben und als Zug- oder Druckfedern ausgebildet sein. In einer konstruktiv höherwertigen Ausführung kann es im Rahmen der Erfindung ebenso vorgesehen sein, dem Stellglied bzw. einer der das Stellglied bildenden hydraulischen Kolben-Zylinder-Anordnungen eine hydraulische Kraftspeichereinrichtung zu zuordnen, welche zumindest einen Hydrospeicher und ein Druckbegrenzungsventil umfaßt. Diese hydraulischen Bauteile sind in den Versorgungsleitungen der hydraulischen Kolben-Zylinder-Anordnungen in Zusammenwirkung mit beispielsweise einem Umschaltventil vorzugsweise so angeordnet, daß zur Ansteuerung bzw. Beaufschlagung der hydraulischen Kolben-Zylinder-Anordnungen mit Druckmittel lediglich eine Anschlußleitung zum landwirtschaftlichen Trägerfahrzeug erforderlich ist. Im Rahmen der Erfindung kann es aber auch so vorgesehen sein, daß jede Kolben-Zylinder-Anordnung über eine eigenständige Anschlußleitung vom landwirtschaftlichen Trägerfahrzeug aus ansteuerbar ist.

Gemäß einer vorteilhaften Weiterbildung der Erfindung ist die hydraulische Kraftspeichereinrichtung mit Erkennungsmitteln versehen, welche der Feststellung der Auflagekraft der Mäheinrichtung auf dem Erdboden bzw. der Größe der Entlastung der Auflagekraft dient. Dabei werden in einfachen Ausführungsformen als Erkennungsmittel vorzugsweise Manometer eingesetzt, während beispielsweise durch die Verwendung von elektrischen Sensorelementen eine Anzeige der Auflagekraft, bzw deren Entlastung unmittelbar am Fahrersitz des Bedieners erfolgen kann.

Eine detaillierte Beschreibung des Gegenstandes der Erfindung erfolgt nun anhand von Ausführungsbeispielen. In der Zeichnung stellt im einzelnen dar:
- Fig.1: eine perspektivische Ansicht der Mähmaschine mit einer Blickrichtung aus einer hinter der Mähmaschine gelegenen Position;
- Fig.2: eine perspektivische Ansicht der Mähmaschine in einer weiteren Ausführungsform ähnlich Fig.1;
- Fig.3: eine Ansicht der an ein landwirtschaftliches Trägerfahrzeug angebauten Mähmaschine in einer in Fahrt- und Arbeitsrichtung weisenden Blickrichtung, wobei sich die Mähmaschine in einer Arbeitsund Betriebsstellung befindet;
- Fig.4: eine Ansicht ähnlich Fig.3, wobei sich die Mähmaschine in einer angehobenen Vorgewendestellung befindet;
- Fig.5: eine Ansicht ähnlich Fig.3, wobei sich die Mähmaschine in einer Transportstellung befindet;
- Fig.6: ein Hydraulikschaltplan einer ersten Ausführungsform;
- Fig.7: ein Hydraulikschaltplan einer zweiten Ausführungsform;

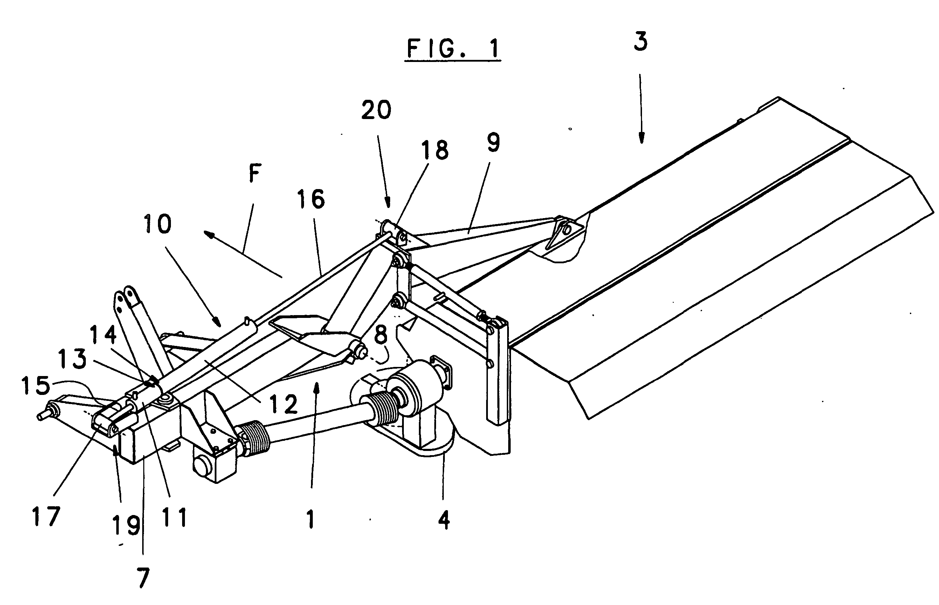

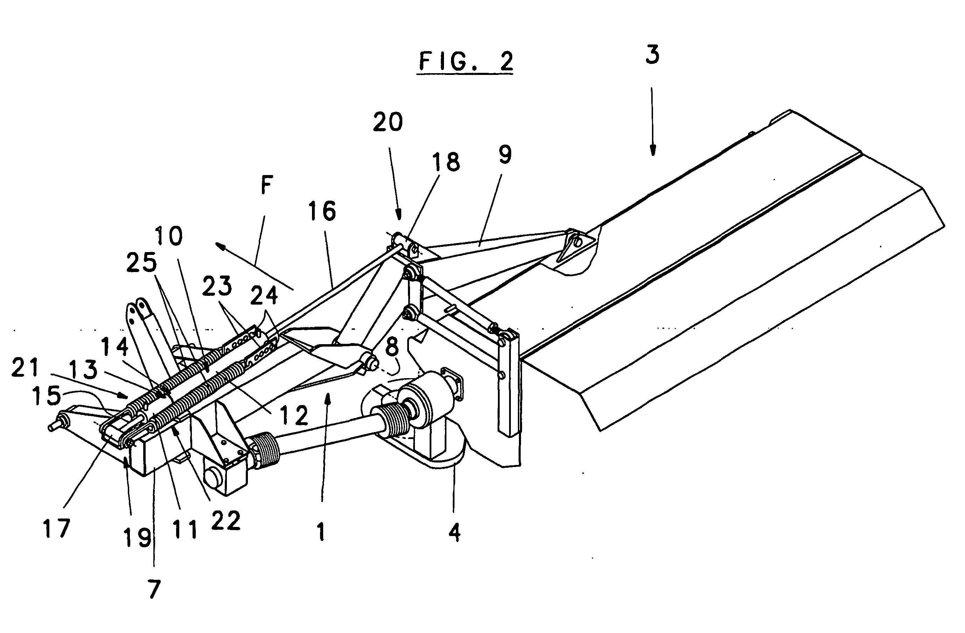

Eine mögliche Ausführungsform einer erfindungsgemäßen Mähmaschine ist in Fig. 1 und 2 näher veranschaulicht. Wie aus diesen Figuren zu erkennen ist, kann dies eine mit einer Trageinrichtung 1 an eine Hubvorrichtung, hier insbesondere eine Dreipunkthubvorrichtung eines landwirtschaftlichen Trägerfahrzeuges 2 ankoppelbare Mähmaschine sein, deren Mäheinrichtung 3 in einer Arbeits- und Betriebsstellung seitlich von dem landwirtschaftlichen Trägerfahrzeug 2 geführt ist. Zur Anpassung an verschiedenste Einsatzverhältnisse oder Erntegüter kann der aus einer Anzahl von auf einem Mähholm 4 angebrachten und um eine etwa vertikale Achse 5 rotierender Schneidorgane 6 bestehenden Mäheinrichtung 3 eine Aufbereitungseinrichtung nachgeordnet sein. Im dargestellten Ausführungsbeispiel umfaßt die Trageinrichtung 1 der Mähmaschine einen in der Arbeits- und Betriebsstellung quer zur Fahrt- und Arbeitsrichtung F ausgerichteten ortfesten Abschnitt 7, an dem sich ein um eine in Fahrt- und Arbeitsrichtung F gerichtete Achse 8 schwenkbarer Abschnitt 9 anschließt. Dieser schwenkbare Abschnitt 9 dient als Tragbalken für die Mäheinrichtung 3, welche vorzugsweise, wie hier dargestellt, über eine sogenannte Schwerpunktaufhängung / Mittenaufhängung am äußeren Ende des schwenkbaren Abschnittes 9 der Trageinrichtung 1 angelenkt ist.

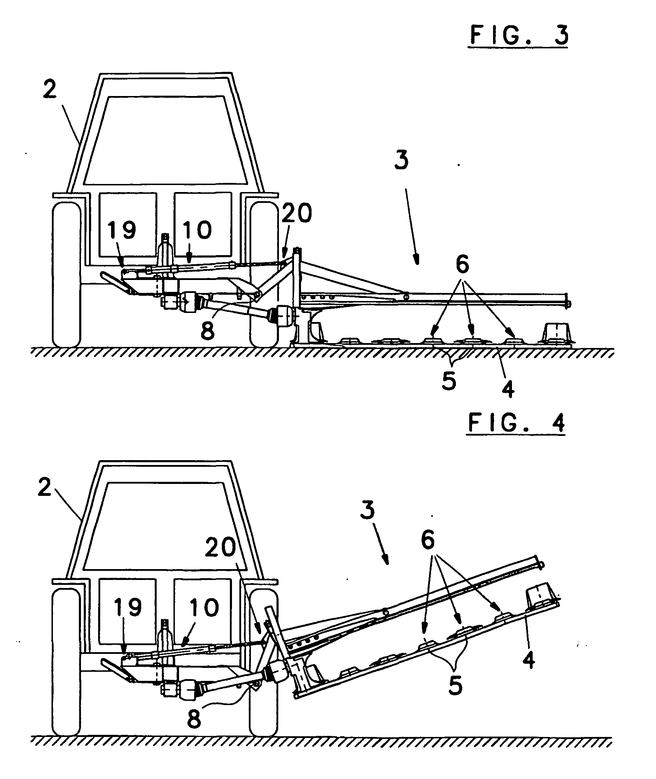

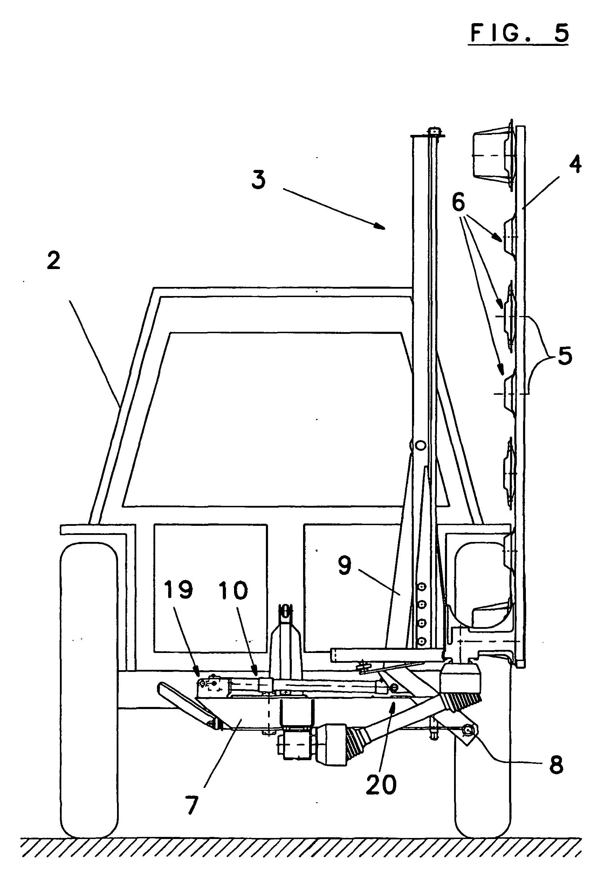

Um nun die Mäheinrichtung 1 der Mähmaschine aus der in Fig.3 dargestellten Arbeits- und Betriebsstellung in eine angehobene Vorgewendestellung nach Fig.4 oder in eine zumindest annähernd vertikale Transportstellung gemäß Fig.5 überführen zu können, ist der Trageinrichtung 1 ein Stellglied 10 zugeordnet, mit dem zwei voneinander unabhängige Stellbewegungen erzeugt werden können. In einer vorteilhaften, hier dargestellten Ausführungsform besteht das Stellglied 10 aus zwei hydraulischen Kolben-Zylinder-Anordnungen 11,12, deren Zylinderböden 13,14 einander zugewandt und fest miteinander verbunden sind, während an den Enden der Kolbenstangen 15,16 Lagerbuchsen 17,18 angebracht sind. Diese Lagerbuchsen 17,18 sind an Anlenkstellen 19,20 des ortfesten Abschnittes 7 und des schwenkbaren Abschnittes 9 der Trageinrichtung 1 schwenkbar angelenkt. Die Größe der Stellbewegungen bzw. der Hub der hydraulischen Kolben-Zylinder-Anordnungen 11,12 ist so gewählt, daß die Überführung der Mäheinrichtung 3 aus der Arbeits- und Betriebsstellung in die angehobene Vorgewendestellung (Fig.4) dann endet, wenn die Kolbenstange 15 der hydraulischen Kolben-Zylinder-Anordnung 11 ganz eingefahren ist, während die Überführung der Mäheinrichtung 3 aus der Arbeits- und Betriebsstellung in die zumindest annähernd vertikale Transportstellung (Fig.5) dann abgeschlossen ist, wenn beide Kolbenstangen 15,16 der hydraulischen Kolben-Zylinder-Anordnungen 11,12 ganz eingefahren sind. Nach der Erfindung ist es aber auch vorstellbar, daß die hydraulischen Kolben-Zylinder-Anordnungen 11,12 so ausgelegt sind, daß mit dem Einfahren der Kolbenstange 15 der Kolben-Zylinder-Anordnung 11 eine Überführung der Mäheinrichtung 3 aus der Arbeits-Und Betriebsstellung (Fig.3) in die angehobene Vorgewendestellung (Fig.4) erfolgt, während das Einfahren der Kolbenstange 16 der Kolben-Zylinder-Anordnung 12 dazu verwendet wird, die Mäheinrichtung 3 aus der Arbeits- und Betriebsstellung (Fig.3) in die zumindest annähernd vertikale Transportstellung (Fig.5) zu verschwenken.

Wie bereits erwähnt, sind in den Fig. 3 bis 5 die Arbeits- und Betriebsstellung, die angehobene Vorgewendestellung und die zumindest annähernd vertikale Transportstellung näher veranschaulicht. Bei angehobenen Vorgewendestellung handelt es sich um eine Zwischenstellung zwischen der Arbeits- und Betriebsstellung und der Transportstellung, bei der die Mäheinrichtung 3 soweit angehoben oder soweit verschwenkt ist, daß die Schneidorgane 6 des Mähholmes 4 nicht mehr mit dem in Mähschwaden abgelegten Erntegut in Berührung kommt.

In Weiterbildung der Erfindung sind dem Stellglied 10 bzw. einer der das Stellglied 10 bildenden Kolben-Zylinder-Anordnungen 11,12 Mittel zugeordnet, welche der Veränderung bzw. der Anpassung der Auflagekraft der Mäheinrichtung 3 auf dem Erdboden an unterschiedliche Betriebs- und Arbeitsverhältnisse dienen. Wie aus Fig.2 hervorgeht, können dies mechanische Kraftspeicher 21,22 sein, die vorzugsweise mit einem Ende an der Anlenkstelle 19 der hydraulischen Kolben-Zylinder-Anordnung 11 und mit dem anderen Ende über Verstellaschen 23 an Haltezapfen 24 der hydraulischen Kolben-Zylinder-Anordnung 12 angelenkt sind. Die mechanischen Kraftspeicher können dabei sowohl als Zugfedern 25 als auch als Druckfedern (nicht dargestellt) ausgeführt sein.

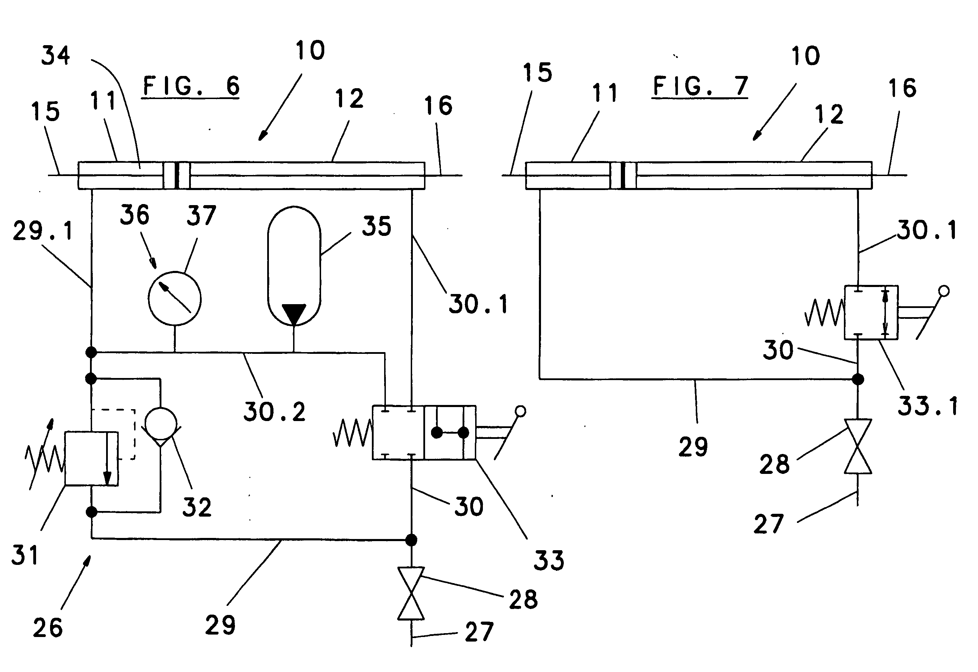

Gemäß einer weiteren vorteilhaften Ausbildung der Erfindung kann einer der das Stellglied 10 bildenden hydraulischen Kolben-Zylinder-Anordnungen 11,12 eine hydraulische Kraftspeichereinrichtung 26 zugeordnet sein. Ein entsprechender Schaltplan ist in Fig.6 näher veranschaulicht. Wie aus diesem Schaltplan hervorgeht, ist zur Versorgung der hydraulischen Kolben-Zylinder-Anordnungen 11,12 mit Druckmittel eine mit dem landwirtschaftlichen Trägerfahrzeug verbundene Anschlußleitung 27 vorgesehen, in der sich ein Absperrventil 28 befindet, welches der Erzeugung eines drucklosen Zustandes der Anschlußleitung 27 beim Abbauen der Mähmaschine vom Trägerfahrzeug dient. Im weiteren Verlauf zu den Kolben-Zylinder-Anordnungen 11,12 hin verzweigt die Anschlußleitung 27 in zwei Zuführleitungen 29,30, wobei sich in der Zuführleitung 29 ein einstellbares Druckbegrenzungsventil 31 und ein dazu parallel angeordnetes, die Fließrichtung zur Kolben-Zylinder-Anordnung 11 freigebendes Rückschlagventil 32 befindet, während die Zuführleitung 30 ein eine Durchlaß- und eine Sperrstellung aufweisendes Umschaltventil 33 enthält. Dieses Umschaltventil 33 dient in der Durchlaßstellung der gleichzeitigen Ansteuerung beider Kolben-Zylinder-Anordnungen 11,12 zur Überführung der Mäheinrichtung 3 aus der Arbeits- und Betriebsstellung in die zumindest annähernd vertikale Transportstellung, wobei beide Kolben-Zylinder-Anordnungen 11,12 über Leitungen 30.1 und 30.2 mit Druckmittel beaufschlagt werden. In der Sperrstellung des Umschaltventiles 33 kann lediglich die Kolben-Zylinder-Anordnung 11 über die Zuführleitung 29 mit Druckmittel versorgt werden, so daß dadurch die Mäheinrichtung 3 in die angehobene Vorgewendestellung angehoben bzw. überführt werden kann. Beim Absenken der Mäheinrichtung 3 aus der angehobenen Vorgewendestellung (Fig.4) in die Arbeits- und Betriebsstellung (Fig.3) verbleibt bedingt durch die Wirkungsweise des Druckbegrenzungsventiles 31 im Druckraum 34 der Kolben-Zylinder-Anordnung 11, der mit einem Hydrospeicher 35 der Hydraulikmittelleitung verbunden ist, ein Restdruck vorhanden, welcher zur Entlastung der Auflagekraft der Mäheinrichtung 3 auf dem Erdboden dient. Um bei der Überführung der Mäheinrichtung 3 aus der zumindest annähernd vertikalen Transportstellung (Fig.5) in die Arbeits- und Betriebsstellung (Fig.3) sicherstellen zu können, daß zunächst die Kolbenstange 16 der Kolben-Zylinder-Anordnung 12 ganz ausgefahren wird und damit der Kolben-Zylinder-Anordnung 11 ein maximaler Bewegungsspielraum in der Arbeits- und Betriebsstellung zur Verfügung steht, ist es vorgesehen, die für die Größe der Stellkräfte der Kolben-Zylinder-Anordnungen 11,12 maßgebende Fläche bei der Kolben-Zylinder-Anordnung 12 etwas kleiner zu gestalten als bei der Kolben-Zylinder-Anordnung 11. Zur Erfassung der Größe der Entlastung der Auflagekraft der Mäheinrichtung 3 auf dem Erdboden sind nach der Erfindung Erkennungsmittel 36 vorgesehen, welche hier vorzugsweise als Manometer 37 ausgeführt sind. Zur Betätigung des Umschaltventiles 33 bleibt noch zu erwähnen, daß diese manuell oder durch elektrische bzw. elektronische Schaltmittel erfolgen kann.

In Fig.7 ist der Schaltplan zur hydraulischen Ansteuerung des erfindungsgemäßen Stellgliedes 10 in einer Ausführungsform nach Fig.2 wiedergegeben, bei der zur Entlastung der Auflagekraft der Mäheinrichtung auf dem Erdboden mechanische Kraftspeicher eingesetzt sind. Wie bereits vorstehend erwähnt, ist auch hier zur Versorgung der hydraulischen Kolben-Zylinder-Anordnungen 11,12 mit Druckmittel eine mit dem landwirtschaftlichen Trägerfahrzeug verbundene Anschlußleitung 27 vorgesehen, in der sich ein Absperrventil 28 befindet. Daran anschließend ist bei dieser Ausführungsform zur einzelnen oder gemeinsamen Ansteuerung der Kolben-Zylinder-Anordnungen 11,12 nur ein eine Durchlaß- und eine Sperrstellung aufweisendes Umschaltventil 33.1 erforderlich.

Obwohl in der Beschreibung und in den dazugehörigen Zeichnungen bereits vorteilhafte Ausführungen beschrieben wurden, so sind im Rahmen der Erfindung durchaus weitere Modifikationen vorstellbar. Als Beispiel sei hier eine Ausführungsvariante zur Herstellung des erfindungsgemäßen Stellgliedes 10 erwähnt, bei der die Kolbenstangen der hydraulischen Kolben-Zylinder-Anordnungen 11,12 einander zugewandt und mit einander verbunden sind.

## Patentansprüche

1. Mähmaschine zum Anbau an eine Hubeinrichtung eines landwirtschaftlichen Trägerfahrzeuges (2) mit einer, in einer Arbeits- und Betriebsstellung seitlich von dem landwirtschaftlichen Trägerfahrzeug (2) geführten Mäheinrichtung (3), welche eine Anzahl von um eine etwa vertikale Achse (5) rotierenden Schneidorganen (6) umfasst, mit einer Trageinrichtung (1), über die die Mäheinrichtung (3) zwischen einer etwa horizontalen Arbeits- und Betriebsstellung, einer angehobenen Vorgewendestellung und einer Transportstellung verschwenkbar ist, **dadurch gekennzeichnet, dass** zur Überführung der Mäheinrichtung (3) zwischen der etwa horizontalen Arbeits- und Betriebsstellung, der angehobenen Vorgewendestellung und einer zumindest annähernd vertikalen Transportstellung und umgekehrt der Trageinrichtung (1) nur ein Stellglied (10) zugeordnet ist, das zwei voneinander unabhängige Stellbewegungen ausführen kann, wobei die Größe der Stellbewegungen so gewählt ist, dass die erste Stellbewegung der Überführung der Mäheinrichtung (3) aus der Arbeits- und Betriebsstellung in die angehobene Vorgewendestellung und die zweite Stellbewegung der Überführung der Mäheinrichtung (3) aus der Arbeits- und Betriebsstellung in die zumindest annähernd vertikale Transportstellung dient oder die zweite Stellbewegung gemeinsam mit der ersten Stellbewegung eine Überführung der Mäheinrichtung (3) aus der Arbeits- und Betriebsstellung in die zumindest annähernd vertikale Transportstellung ergibt.

2. Mähmaschine nach Anspruch 1, **dadurch gekennzeichnet, dass** dem Stellglied (10) der Trageinrichtung (1) Mittel zur Veränderung der Auflagekraft der Mäheinrichtung (3) auf dem Erdboden zugeordnet sind.

3. Mähmaschine nach Anspruch 1 und 2, **dadurch gekennzeichnet, dass** dem Stellglied (10) der Trageinrichtung (1) Kraftspeicher (21,22) zur Veränderung der Auflagekraft der Mäheinrichtung (3) auf dem Erdboden zugeordnet sind.

4. Mähmaschine nach Anspruch 3, **dadurch gekennzeichnet, dass** die Kraftspeicher (21,22) als Zugfedern (25) ausgebildet sind.

5. Mähmaschine nach Anspruch 3, **dadurch gekennzeichnet, dass** die Kraftspeicher (21,22) als Druckfedern ausgeführt sind.

6. Mähmaschine nach einem der Ansprüche 1 bis 5, **dadurch gekennzeichnet, dass** das Stellglied (10) aus zwei hydraulischen Kolben-Zylinder-Anordnungen (11,12) gebildet ist, deren Zylinderböden (13,14) einander zugewandt und fest miteinander verbunden sind.

7. Mähmaschine nach einem der Ansprüche 1 bis 5, **dadurch gekennzeichnet, dass** das Stellglied (10) aus zwei hydraulischen Kolben-Zylinder-Anordnungen (11,12) gebildet ist, welche über ein gemeinsames Zylinderbodenelement miteinander verbunden sind.

8. Mähmaschine nach einem der Ansprüche 1 bis 5, **dadurch gekennzeichnet, dass** das Stellglied (10) aus zwei hydraulischen Kolben-Zylinder-Anordnungen (11,12) gebildet ist, deren Kolbenstangen (15,16) einander zugewandt und fest miteinander verbunden sind.

9. Mähmaschine nach einem der Ansprüche 6 bis 8, **dadurch gekennzeichnet, dass** einer der hydraulischen Kolben-Zylinder-Anordnungen (11,12) des Stellgliedes (10) eine hydraulische Kraftspeichereinrichtung (26) zur Veränderung der Auflagekraft der Mäheinrichtung (3) auf dem Erdboden zugeordnet ist.

10. Mähmaschine nach Anspruch 9, **dadurch gekennzeichnet, dass** in der Zuleitung der hydraulischen Kolben-Zylinder-Anordnung (11) mit dem kleineren Hub die hydraulische Kraftspeichereinrichtung (26) vorgesehen ist.

11. Mähmaschine nach Anspruch 9 und 10, **dadurch gekennzeichnet, dass** die hydraulische Kraftspeichereinrichtung (26) zumindest einen Hydrospeicher (35) und ein Druckbegrenzungsventil (31) umfasst.

12. Mähmaschine nach einem der Ansprüche 9 bis 11, **dadurch gekennzeichnet, dass** die hydraulische Kraftspeichereinrichtung (26) mit Erkennungsmitteln (36) zur Feststellung des im Druckraum (34) der hydraulischen Kolben-Zylinder-Anordnung (11) vorhandenen Druckes versehen ist.

13. Mähmaschine nach Anspruch 12, **dadurch gekennzeichnet, dass** das Erkennungsmittel (36) ein Manometer (37) ist.

## Claims

1. Mowing machine for attachment to a lifting device of an agricultural carrying vehicle (2) with a mowing device (3), guided in a working and operating position to the side of the agricultural carrying vehicle (2), which comprises a number of cutting elements (6) rotating about an approximately vertical axle (5), with a carrying device (1), by means of which the mowing device (3) can be pivoted between an approximately horizontal working and operating position, a raised pre-turning position, and a transport position, **characterised in that**, in order to move the mowing device (3) between the approximately horizontal working and operating position, the raised preturning position, and an at least approximately vertical transport position and vice-versa, only one actuator element (10) is allocated to the carrying device (1), which can carry out two adjustment movements independently of on another, whereby the extent of the adjustment movements is selected in such a way that the first adjustment movement serves to move the mowing device (3) out of the working and operating position into the raised pre-turning position, and the second adjustment movement serves to move the mowing device (3) out of the working and operating position into the at least approximately vertical transport position, or the second adjustment movement jointly with the first adjustment movement results in the movement of the mowing device (3) out of the working and operating position into the at least approximately vertical transport position.

2. Mowing machine according to claim1, **characterised in that** means are allocated to the actuator element (10) of the carrying device (1) to change the imposition force of the mowing device (3) on the ground.

3. Mowing machine according to claims1 and 2, **characterised in that** energy storage mechanisms (21, 22) are allocated to the actuator element (10) of the carrying device (1) in order to change the imposition force of the mowing device (3) on the ground.

4. Mowing machine according to claim 3, **characterised in that** energy storage mechanisms (21, 22) are designed as tension springs (25).

5. Mowing machine according to claim 3, **characterised in that** energy storage mechanisms (21, 22) are designed as pressure springs.

6. Mowing machine according to one of claims 1 to 5, **characterised in that** the actuator element (10) is formed from two hydraulic piston-cylinder arrangements (11, 12), of which the cylinder bases (13, 14) face one another and are connected to one another.

7. Mowing machine according to one of claims 1 to 5, **characterised in that** the actuator element (10) is formed from two hydraulic piston-cylinder arrangements (11, 12), which are connected to one another by a common cylinder base element.

8. Mowing machine according to one of claims 1 to 5, **characterised in that** the actuator element (10) is formed from two hydraulic piston-cylinder arrangements (11, 12), of which the piston rods (15, 16) face one another and are connected to one another.

9. Mowing machine according to one of claims 6 to 8, **characterised in that** a hydraulic force storage device (26) is allocated to one of the hydraulic piston-cylinder arrangements (11, 12) of the actuator (10) in order to change the imposition force of the mowing device (3) on the ground.

10. Mowing machine according to claim 9, **characterised in that** the hydraulic force storage device (26) is provided in the feed line of the hydraulic piston-cylinder arrangement (11) with the smaller stroke.

11. Mowing machine according to claims 9 and 10, **characterised in that** the hydraulic force storage device (26) comprises at least one hydraulic accumulator (35) and a pressure limiting valve (31).

12. Mowing machine according to one of claims 9 to 11, **characterised in that** the hydraulic force storage device (26) is provided with identification means (36) for determining the pressure present in the pressure chamber (34) of the hydraulic piston-cylinder arrangement (11).

13. Mowing machine according to one of claims 9 to 11, **characterised in that** the identification means (36) is a pressure gauge (37)

## Revendications

1. Moissonneuse pour montage sur un dispositif de levage d'un tracteur agricole (2), comprenant un dispositif de coupe (3) guidé latéralement dans une position de travail et de fonctionnement par le tracteur agricole (2), qui comprend un nombre d'organes de coupe (6) en rotation autour d'un axe (5) sensiblement vertical, avec un dispositif porteur (1) permettant de pivoter le dispositif de coupe entre une position de travail et de fonctionnement sensiblement horizontale, une position avancée soulevée et une position de transport,
**caractérisée en ce que**
pour transférer le dispositif de coupe (3) entre la position de travail et de fonctionnement sensiblement horizontale, la position avancée soulevée et une position de transport du moins approximativement verticale et inversement, un seul organe de réglage (10) associé au dispositif porteur (1) qui peut effectuer deux mouvements de réglage indépendants, et l'ampleur des mouvements de réglage est choisie de sorte que le premier mouvement de réglage serve au transfert du dispositif de coupe (3) de la position de travail et de fonctionnement dans la position avancée soulevée et que le deuxième mouvement de réglage serve au transfert du dispositif de coupe (3) de la position de travail et de fonctionnement dans la position de transport du moins approximativement verticale, ou que le deuxième mouvement de réglage simultanément avec le premier mouvement de réglage permette un transfert du dispositif de coupe (3) de la position de travail et de fonctionnement dans la position de transport du moins approximativement verticale.

2. Moissonneuse selon la revendication 1,
**caractérisée en ce que**
des moyens sont associés à l'organe de réglage (10) du dispositif porteur (1) pour modifier la force d'appui du dispositif de coupe (3) sur le sol.

3. Moissonneuse selon les revendications 1 et 2,
**caractérisée en ce que**
des accumulateurs d'énergie (21, 22) sont associés à l'organe de réglage (10) du dispositif porteur (1) pour modifier la force d'appui du dispositif de coupe (3) sur le sol.

4. Moissonneuse selon la revendication 3,
**caractérisée en ce que**
les accumulateurs d'énergie (21, 22) présentent la forme de ressorts de traction (25).

5. Moissonneuse selon la revendication 3,
**caractérisée en ce que**
les accumulateurs d'énergie (21, 22) présentent la forme de ressorts de compression.

6. Moissonneuse selon l'une quelconque des revendications 1 à 5,
**caractérisée en ce que**
l'organe de réglage (10) est formé à partir de deux vérins hydrauliques (11, 12) dont les fonds de cylindre (13, 14) sont tournés l'un vers l'autre et solidaires l'un de l'autre.

7. Moissonneuse selon l'une quelconque des revendications 1 à 5,
**caractérisée en ce que**
l'organe de réglage (10) est formé à partir de deux vérins hydrauliques (11, 12) reliés l'un à l'autre par un élément de fond de cylindre commun.

8. Moissonneuse selon l'une quelconque des revendications 1 à 5,
**caractérisée en ce que**
l'organe de réglage (10) est formé à partir de deux vérins hydrauliques (11, 12) dont les tiges de piston (15, 16) sont tournées l'une vers l'autre et solidaires l'une de l'autre.

9. Moissonneuse selon l'une quelconque des revendications 6 à 8,
**caractérisée en ce qu'**
un dispositif accumulateur d'énergie hydraulique (26) est associé à l'un des vérins hydrauliques (11, 12) de l'organe de réglage (10) pour modifier la force d'appui du dispositif de coupe (3) sur le sol.

10. Moissonneuse selon la revendication 9,
**caractérisée en ce que**
le dispositif accumulateur d'énergie hydraulique (26) est prévu dans la conduite d'alimentation du vérin hydraulique (11) présentant la plus petite course.

11. Moissonneuse selon les revendications 9 et 10,
**caractérisée en ce que**
le dispositif accumulateur d'énergie hydraulique (26) comprend au moins un accumulateur hydraulique (35) et une soupape de limitation de pression (31).

12. Moissonneuse selon l'une quelconque des revendications 9 à 11,
**caractérisée en ce que**
le dispositif accumulateur d'énergie hydraulique (26) est muni de moyens de détection (36) pour détecter la pression régnant dans la chambre de pression (34) du vérin hydraulique (11).

13. Moissonneuse selon la revendication 12,
**caractérisée en ce que**
le moyen de détection (36) est un manomètre (37).
